# EUROPEAN PATENT APPLICATION

(11) **EP 4 617 630 A1**
(43) Date of publication of application: **17.09.2025**
(21) Application number: 25163359.0
(22) Date of filing: 12.03.2025
(51) Int. Cl.: G01G 15/00, G01G 21/22, B28B 13/04

(54) **MACHINE FOR WEIGHING PLATE-LIKE ELEMENTS AND METHOD FOR WEIGHING PLATE-LIKE ELEMENTS**

(30) Priority: 12.03.2024 IT 202400005503
(71) Applicant: Errevi Ceramics S.r.l., 41049 Sassuolo (MO) (IT)
(72) Inventor: VANDELLI, Massimo, 41049 Sassuolo (MO) (IT); BERGONZONI, Federico, 41042 Fiorano Modenese (MO) (IT)
(74) Representative: Gallo, Luca

(57) **Abstract**

Machine (1) for weighing plate-like elements, in particular tiles, comprising a plurality of rollers (8) and a load platform (10). Such rollers (8) are side-by-side each other along a transport direction (X), are each extended along a main axis (Y) thereof perpendicular to the transport direction (X), are parallel to each other, each define, with the adjacent roller, an elongated slit (9) and are actuatable to rotate around their main axes (Y) in order to move the plate-like elements along the transport direction (X). The load platform (10) is provided with multiple projecting elements (11), each of which terminates with a free end (12) thereof and is placed at a respective slit (9). In addition, the aforesaid load platform (10) is movable at least between a lowered position, in which the free ends (12) of the projecting elements (11) are each placed in the corresponding slit (9) and interposed between the two adjacent rollers (8), and a raised position, in which the projecting elements (11) each traverse the corresponding slit (9) and their free ends (12) each project from the respective slit (9) in order to lift the plate-like elements from the rollers (8) and allow a load cell (7) mechanically connected to the load platform (10) itself to detect the weight of the aforesaid lifted plate-like elements.

## Description

### Field of application

The present invention regards a machine and a method for weighing plate-like elements, according to the respective independent claims.

The present invention is advantageously inserted in the industrial field of plants for producing tiles, in particular ceramic tiles.

More in detail, by means of the present invention it is possible to weigh the tiles so as to determine if the correct quantity of enamel has been deposited on them.

### State of the art

As is known, ceramic tiles are attained by means of a process which provides for at least the pressing in molds of clay powder or granules, a firing step and an enameling step in which an enamel layer is deposited on the face intended to remain visible.

In the field of tile production, there is the need to execute a control on the quantity of enamel deposited on the tiles themselves, in a manner such to determine if the enamel layer has the right thickness or not.

In order to determine the quantity of enamel deposited, it is known to install, in a plant for weighing the tiles, a weighing machine upstream of the enameling station and a weighing machine downstream of such enameling station, in a manner such that from the weight difference between the enameled tile and the tile lacking enamel layer it is possible to obtain the weight of the enamel layer itself and, from this, the thickness of the enamel layer.

In particular, widespread on the market are plants for producing tiles provided with a conveyor belt which moves the tiles, traversing the various stations, including that of enameling, and with multiple weighing machines, of the type described in the Italian patent IT BO960497. One of such weighing machines is placed to intercept the belt conveyor and upstream of the enameling station and another weighing machine is in turn placed to intercept the belt conveyor and downstream of the aforesaid enameling station. More in detail, the belt conveyor is formed by a plurality of belts wound as a ring and placed side-by-side each other and the weighing machines are each provided with a support frame thereof, which is placed below the belts of the belt conveyor, with a lifting platform, which is movably mounted on the support frame and has projecting elements susceptible of being inserted between the belts of the belt conveyor in order to be able to lift the tiles from the belts, and with a load cell operatively associated with the lifting platform in order to be able to detect the weight of the tiles once they have been separated from the aforesaid belts.

The machines for weighing tiles of known type have in practice proven that they do not lack drawbacks.

In particular, such machines are structurally complex since they must be provided with load platforms that are capable of being moved both vertically, in order to ensure that the projecting elements are inserted between the belts of the belt conveyor, and horizontally, in a manner such that the tile just weighed does not collide with the subsequent tile still to be weighed, transferred by the belt conveyor when the lifting platform is lowered in order to once again lay the aforesaid weighed tile on the belt conveyor.

Such configuration of the lifting platform movable both vertically and horizontally renders the machine for weighing tiles costlier and more easily subjected to breakage and machine stops due to the complexity of the means that move the load platform.

In addition, a further drawback of such machines of known type lies in the low precision in detecting the weight. Indeed, the load cell is arranged for measuring the weight of the lifted tile while the lifting platform is movable in horizontal translation in order to remain in line with the advancement of the other tiles still to be weighed that lie on the belt conveyor, with the consequence that the measurement is affected by the inertial forces that are unloaded on the transported tile and that are due to the acceleration and deceleration of the lifting platform.

Also known on the market are further machines for weighing tiles, of the type described in EP 1031824, installed to intercept a belt conveyor on which the tiles to be weighed are transferred. Such machines are provided with lifting means in the form of idle and fixed rollers, which are mounted on a frame placed below the belt conveyor and partly project with respect to the aforesaid belt conveyor, in a manner such that tiles, by advancing transported by the belt conveyor, hit with an edge thereof against the projecting part of the rollers and are lifted in order to translate on such rollers. In addition, the aforesaid weighing machines are provided with weighing means, which are placed downstream of the lifting means and comprise a fixed platform which is positioned below the belt conveyor on load cells and supports the rollers that are at least partly projecting with respect to the conveyor belt and susceptible of receiving the plate-like element to be weighed that falls thereon after having been lifted, following the impact against the rollers of the lifting means.

Such machine for weighing of known type has considerable drawbacks, since the plate-like element to be weighed risks being broken, falling on the rollers of the platform with load cells and, even in the event in which the plate-like element does not break, the precision with which the load cells detect the weight of the plate-like element is rather low, detecting the weight of a translating plate-like element just after having fallen.

### Presentation of the invention

The main object of the present invention is therefore that of overcoming the drawbacks manifested by the solutions of known type, by providing a machine and a method for weighing plate-like elements, which allow detecting the weight in a more precise manner with respect to the machines and methods of the prior art.

A further object of the present invention is that of providing a machine and a method for weighing plate-like elements, which are simpler than the machines and the methods of the prior art.

A further object of the present invention is that of providing a machine and a method for weighing plate-like elements, which are entirely reliable in operation.

A further object of the present invention is that of providing a machine and a method for weighing plate-like elements, which are inexpensive.

### Brief description of the drawings

The technical characteristics of the invention, according to the aforesaid objects, are clearly seen in the contents of the below-reported claims and the advantages thereof will be more evident from the following detailed description, made with reference to the enclosed drawings, which represent a merely exemplifying and non-limiting example of the invention, in which:

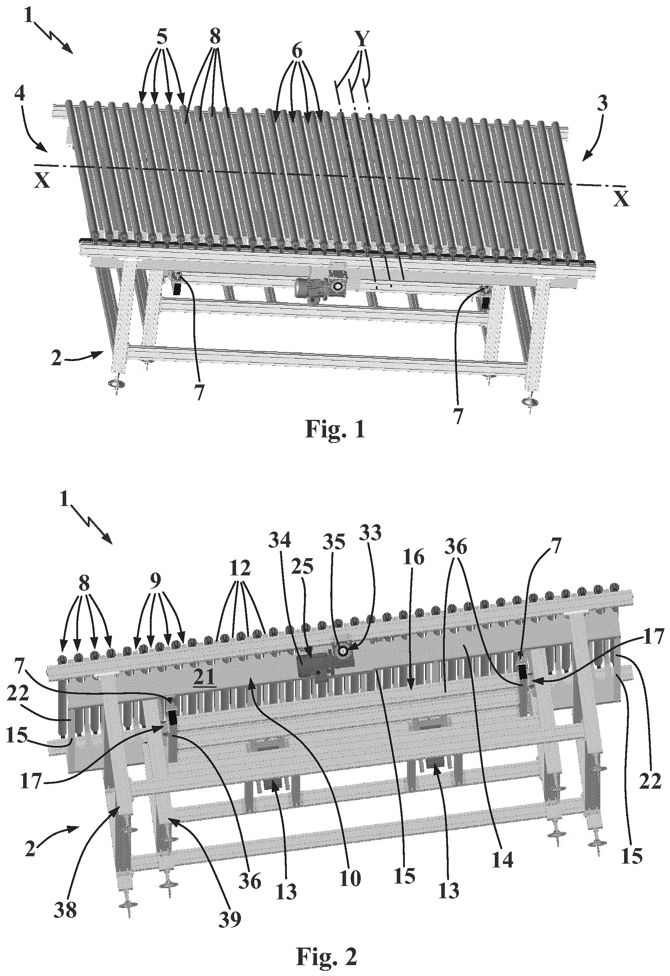

- figure 1 shows a top side perspective view of a machine for weighing plate-like elements, object of the present invention;
- figure 2 shows a bottom side perspective view of the machine for weighing plate-like elements of figure 1;

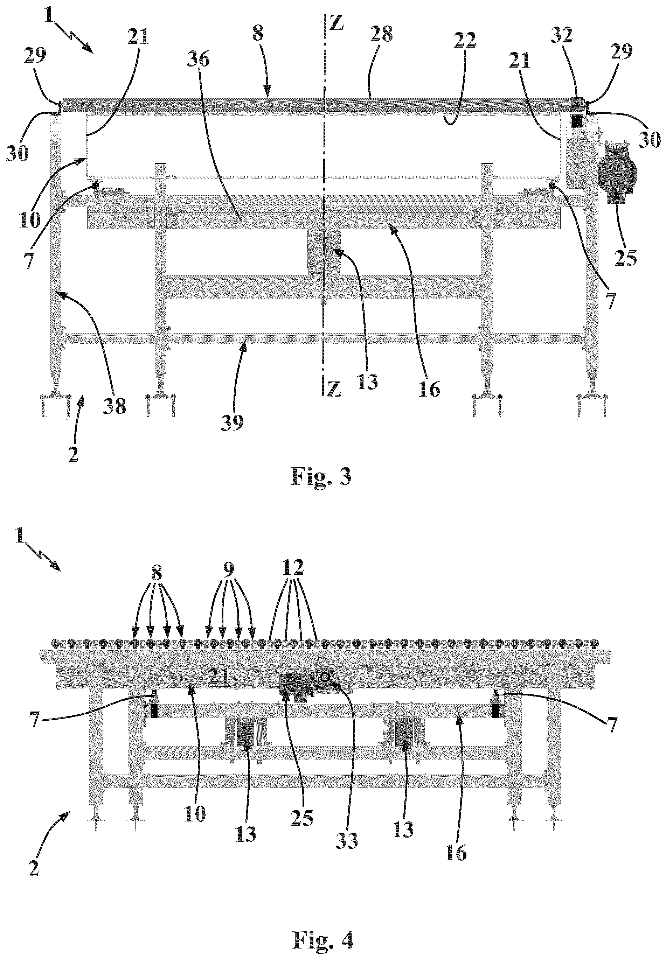

- figure 3 shows a first side view in orthogonal projection of the machine for weighing plate-like elements of figure 1;
- figure 4 shows a second side view in orthogonal projection of the machine for weighing plate-like elements of figure 1;

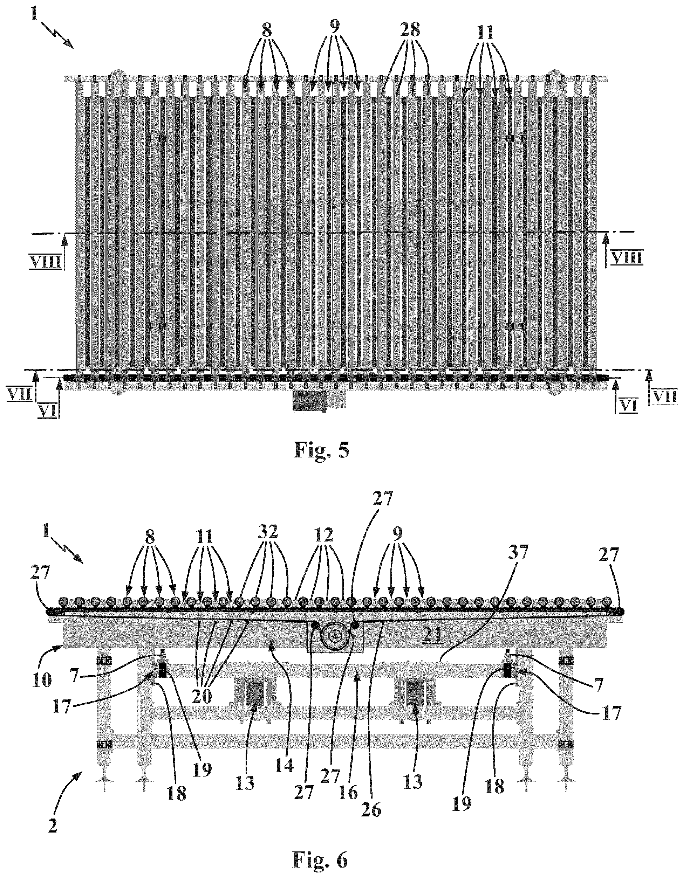

- figure 5 shows a top plan view of the machine for weighing plate-like elements of figure 1;
- figure 6 shows a side section view of the machine for weighing plate-like elements, object of the present invention, in which the section is made along the trace VI-VI of figure 5;

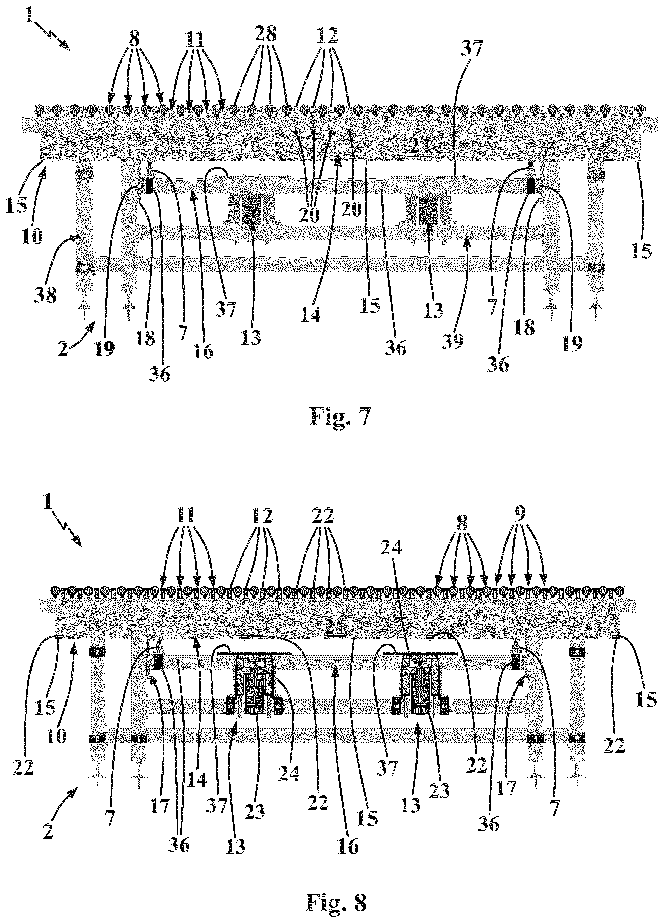

- figure 7 shows a side section view of the machine for weighing plate-like elements, object of the present invention, in which the section is made along the trace VII-VII of figure 5;
- figure 8 shows a side section view of the machine for weighing plate-like elements, object of the present invention, in which the section is made along the trace VIII-VIII of figure 5;

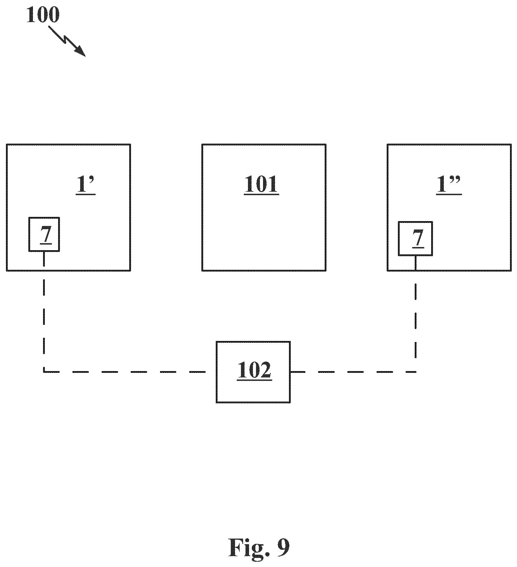

- figure 9 shows a schematic view of a part of a plant for producing plate-like elements comprising two machines for weighing plate-like elements, object of the present invention.

### Detailed description of a preferred embodiment

With reference to the enclosed drawings, reference number 1 overall indicates a machine for weighing plate-like elements, in particular tiles, object of the present invention.

Advantageously, as better described hereinbelow, the present machine 1 for weighing plate-like elements is intended to be employed in a plant for producing plate-like elements, e.g. ceramic tiles, in particular in order to be able to weigh the plate-like elements before and after having been subjected to an enameling processing, such to be able to obtain therefore the weight of enamel which was deposited on the plate-like elements themselves during the aforesaid enameling processing.

The machine 1 according to the invention comprises at least one support frame 2 extended along a transport direction X between an inlet section 3, at which the machine 1 itself is susceptible of receiving the plate-like elements to be weighed, and an outlet section 4, at which such present machine 1 is susceptible of unloading the weighed plate-like elements.

In addition, the present machine 1 comprises advancing means 5 for advancing the plate-like elements, which are mounted on the support frame 2 and are arranged for moving the plate-like elements along the transport direction X.

The present machine 1 also comprises lifting means 6 for lifting the plate-like elements, which are mounted on the support frame 2 and are arranged for lifting the plate-like elements from the advancing means 5, and at least one load cell 7, which is mechanically connected to the lifting means 6 and arranged for detecting the weight of the lifted plate-like elements with respect to the advancing means 5.

According to the idea underlying the present invention, the advancing means 5 comprise a plurality of rollers 8, which are side-by-side each other along the transport direction X, are each extended along a main axis Y thereof perpendicular to the transport direction X, are parallel to each other, each define with the adjacent roller an elongated slit 9 and are actuatable to rotate around their main axes Y in order to move the plate-like elements along the transport direction X.

More in detail, the rollers 8 are actuatable to rotate in a first sense in order to move the plate-like elements along the transport direction X from the inlet section 3 to the outlet section 4 and possibly also in a second sense opposite the first in order to move the aforesaid plate-like elements along the transport direction X from the outlet section 4 to the inlet section 3.

Advantageously, the transport direction X and the main axes Y of the rollers 8 are horizontal, in a manner such that the aforesaid rollers 8 in substance form a horizontal lying plane on which the plate-like elements can lie and translate.

Additionally, still according to the idea underlying the present invention, the lifting means 6 comprise at least one load platform 10 provided with multiple projecting elements 11, each of which terminates with a free end 12 thereof and is placed at a respective slit 9. Such load platform 10 is movable at least between a lowered position, in which the free ends 12 of the projecting elements 11 are each placed in the corresponding slit 9 and interposed between the two adjacent rollers 8, and a raised position, in which the free ends 12 of the projecting elements 11 each project from the respective slit 9 in order to lift the plate-like elements from the rollers 8 of the advancing means 5 and allow the at least one load cell 7 mechanically connected to the load platform 10 to detect the weight of the lifted plate-like elements.

In particular, with the load platform 10 in raised position, the free ends 12 are arranged for receiving the plate-like elements in contact.

Advantageously, with the load platform 10 in the raised position, the projecting elements 11 each traverse the corresponding slit 9.

Advantageously, the claimed configuration of the advancing means 5 (which comprise multiple parallel rollers 8, rotatable on themselves and perpendicular to the advancing direction X) and of the lifting means 6 (which comprise a movable load platform 10 with the projecting elements 11 placed at the slits 9 between the rollers 8) renders the measurement of the weight of the plate-like elements by the load cell 7 particularly precise, since, when the load platform 10 is in raised position, the plate-like elements are weighed, when stopped, by the load cell 7, independent of whether the rollers 8 continue to rotate or not. In particular, the fact that the movement of the plate-like elements along the transport direction X is only determined by the rotation of the rollers 8 (which always maintain their position fixed) and that the load platform 10 in raised position has the projecting elements 11 inserted in the slits 9 between the rollers 8 in order to separate the plate-like elements from the aforesaid rollers 8 ensures that the load platform 10 must remain stopped in raised position during the detection of the weight by the load cell 7, with the consequence that such detection is not affected by any inertial force due to the accelerations and decelerations that the load platform 10 itself would carry out if it moved along the transport direction X (hence unlike what occurs in the weighing machines of the prior art that provide for a weighing of the plate-like elements with the elements that are moving).

In addition, the aforesaid configuration of the advancing means 5 and of the lifting means 6 renders the present machine advantageously simple, from a structural viewpoint, since such advancing means 5 and lifting means 6 are uncoupled from each in the operation thereof, with the advancing means 5 which only carry out the transport of the plate-like elements by means of the rotating rollers 8 and the lifting means 6 which only carry out the separation of the plate-like elements from the rollers 8 by means of the load platform 10. In this manner, it is thus prevented that there are means set both for advancing and lifting the plate-like elements by means of a composition of different motion laws (as instead is provided for in the machines of the prior art). Advantageously, the advancing means 5 comprise an actuation motor 25, which is mounted on the support frame 2, and a transmission belt 26, which is wound as a ring around at least two return rollers 27 rotatably associated with the support frame 2 around directions substantially parallel to the main axes Y of the rollers 8, is placed in contact with the rollers 8 and is actuatable to slide by the actuation motor 25 around the aforesaid at least two return rollers 27 in order to rotate the rollers 8 around their main axes Y.

The rollers 8 advantageously comprise a cylindrical body 28, which is extended along the corresponding main axis Y between two corresponding ends, and two rotation pins 29, each of which placed at a respective end and rotatably associated with the support frame 2 around the main axis Y of the respective roller 8.

In addition, the support frame 2 comprises two support brackets 30 for each roller 8, each of which carries a respective rotation pin 29 rotatably associated therewith.

In particular, as illustrated in the enclosed figures, each support bracket 30 is provided with two prongs defining a housing seat between them, in particular having substantially "U" shaped form, in which a corresponding rotation pin 29 is placed.

Otherwise, in accordance with a non-illustrated embodiment, each support bracket 30 is provided with an eyelet traversed by a corresponding rotation pin 29.

Preferably, each roller 8 is provided with a toothed crown 32 at one of the ends of the cylindrical body 29 and the transmission belt 26 is a flexible rack placed in contact with the toothed crowns 32, in a manner such that the motion is transferred from the transmission belt 26 to the rollers 8 not only via friction but also via meshing.

In particular, the actuation motor 25 is arranged for sliding the transmission belt 26 through an intermediate transmission member 33, e.g. suitable for forming a gearbox.

More in detail, the actuation motor 25 is provided with a first casing 34 fixed (directly or indirectly through other fixing components, such as for example brackets and the like) to the support frame 2, and a first outlet shaft, which is rotatably associated with the first casing 34 and is engaged with the intermediate transmission member 33 in order to slide the transmission belt 26 through this.

In particular, in order to optimize the sizes, the first outlet shaft of the actuation motor 25 is extended along a direction substantially parallel to the transport direction X and the intermediate transmission member 33 comprises at least pinion 35 coupled to the first outlet shaft of the actuation motor 25 and integral in rotation with one of the return rollers 27 around which the transmission track 26 is wound.

The projecting elements 11 are extended preferably height-wise, each along a first extension direction perpendicular to the transport direction X and to the main axes Y of the rollers 8, in a manner such that the rollers 8 can be placed close to each other, rendering the elongated slits 9 as narrow as possible.

Additionally, the projecting elements 11 are preferably extended width-wise, each along a second extension direction parallel to the main axes Y of the rollers 8, in particular with extension slightly lower than that of the elongated slits 9, in a manner such that a plate-like element to be weighed can be lifted from the load platform 10 regardless of the point where it rests on the rollers 8.

Advantageously, the load platform 10 is provided with a base portion 14 starting from which the projecting elements 11 are extended.

In accordance with the preferred embodiment illustrated in the enclosed figures, such base portion 14 is preferably placed below the rollers 8 and, in addition, the projecting elements 11 still more preferably have their free end 12 directed upward. In this manner, each projecting element 11 can be inserted in a corresponding slit 9 defined between the rollers 8 placed above with respect to the base portion 14.

Otherwise, in accordance with an embodiment not illustrated in the enclosed figures, the base portion 14 is preferably placed above the rollers 8 and, in addition, the projecting elements 11 have their free end 12 directed downward and are each provided with a first passage opening, which lies on a plane transverse to the transport direction X and passes along such transport direction X.

For example, each projecting element 11 has substantially "U" shaped form (seen on a plane orthogonal to the transport direction X), with two first lateral arms which between them delimit the first passage opening and are connected by a first connection portion, which defines the free end 12 of the projecting element 11 itself and on the lower part delimits the same first passage opening.

Advantageously, the first passage opening of each projecting element 11 is susceptible of being traversed by the plate-like elements when the load platform 10 is in lowered position and the rollers 8 are actuated to rotate around their main axes Y.

In particular, with the load platform 10 in lowered position, the base portion 14 of the load platform 10 is spaced from the rollers 8 (in order to not come into contact with the latter) and the free ends 12 of the projecting elements 11 are each placed in the corresponding slit 9 and interposed between the two adjacent rollers 8.

In this manner, when the load platform 10 is in lowered position, the rollers 8 can rotate in order to advance the plate-like elements along the transport direction X and ensure that such plate-like elements traverse the first passage openings of the projecting elements 11 (in particular the free space left between the rollers 8 and the base portion 14 - spaced from the rollers 8 - from which the projecting elements 11 having the first passage openings are extended projecting). In addition, in operation, when the load platform 10 is moved from the lowered position to the raised position, the free ends 12 of the projecting elements 11 translate in order to each exit from the corresponding slit 9 and project therefrom and then lift, from the rollers 8, the plate-like elements which occupy the first passage openings of the projecting elements 11 themselves, with the consequence that the at least one load cell 7 mechanically connected to the load platform 10 can detect the weight of the lifted plate-like elements (which are stopped).

Independent of whether the load platform 10 has its base portion 14 placed above the rollers 8 (as provided for in the illustrated embodiment) or below the rollers 8 (in accordance with the non-illustrated embodiment), the load platform 10 can take on further positions in addition to the lowered position and to the raised position. For example (both in the illustrated preferred embodiment and in the embodiment not illustrated in the enclosed figures), the load platform 10 can take on a rest position, in which the free ends 12 of the projecting elements 11 are placed outside the corresponding slit 9 and below the rollers 8, and can be actuated to be moved from the rest position to the raised position, passing through the lowered position, in which the free ends 12 of the projecting elements 11 are each placed in the corresponding slit 9 and interposed between the two adjacent rollers 8.

More in detail, each projecting element 11 is extended from a base end 20 thereof, which is constrained to the base portion 14, to the free end 12 thereof, in particular along the first extension direction.

In particular, in accordance with the illustrated preferred embodiment with base portion 14 placed below the rollers 8, each projecting element 11 is extended from the base end thereof 20, which is constrained to the base portion 14 and is placed below the rollers 8 both when the load platform 10 is in lowered position and when the load platform 10 is in raised position, to the free end 12 thereof, which is placed in the corresponding slit 9 and interposed between the two adjacent rollers 8 when the load platform 10 is in lowered position and projects from the corresponding slit 9 (i.e., in other words, it is placed above the corresponding slit 9 and thus above the rollers 8) when the load platform 10 is in raised position. More in detail, this involves that each projecting element 11 traverse (i.e., in other words, engages) the corresponding slit 9 both when the load platform 10 is in raised position and when the load platform is in lowered position. Otherwise, in accordance with the embodiment not illustrated in the enclosed figures and having the base portion 14 placed above the rollers 8, each projecting element 11 extended from the base end 20 thereof, which is constrained to the base portion 14 and is placed above the rollers 8 both when the load platform 10 is in lowered position and when the load platform 10 is in raised position, to the free end 12 thereof, which is placed in the corresponding slit 9 and interposed between the two adjacent rollers 8 when the load platform 10 is in lowered position and projects from the corresponding slit 9 (i.e., in other words, it is placed above the corresponding slit 9 and hence above the rollers 8) when the load platform 10 is in raised position. More in detail, this involves that each projecting element 11 traverses (i.e., in other words, engages) the corresponding slit 9 when the load platform 10 is in lowered position and that each projecting element 11 does not traverse the corresponding slit 9 when the load platform 10 is in raised position.

Advantageously (in accordance both with the preferred illustrated embodiment and with the embodiment not illustrated in the enclosed figures), with the load platform 10 in raised position, the free end 12 of each projecting element 11 defines, with the rollers 8, a crossing opening, which lies on a plane transverse to the transport direction X.

Preferably, with the load platform 10 in raised position and the rollers 8 actuated in rotation around their main axes Y, each crossing opening - defined by the free end 12 of each projecting element 11 with the rollers 8 - is susceptible of being traversed by the plate-like elements placed in abutment against the rollers 8.

In this manner, when the load platform 10 is moved from the lowered position to the raised position in order to separate, from the rollers 8, the plate-like elements to be weighed, the rollers 8 can continue to rotate around their main axes Y in order to advance other plate-like elements along the transport direction X which must not be weighed, making them traverse the crossing openings defined by each free end 12 with the rollers 8. Therefore, in operation, the load platform 10 in raised position, in addition to allowing the load cell 7 to detect the weight of the lifted plate-like elements, acts as storage for the aforesaid lifted plate-like elements, while it allows the rollers 8 to continue to rotate in order to advance other plate-like elements along the transport direction X.

In accordance with the preferred embodiment illustrated in the enclosed figures, each projecting element 11 is advantageously provided with a second passage opening, which lies on a plane transverse to the transport direction X and passes along such transport direction X.

For example, each projecting element 11 has substantially overturned "U" shaped form (seen on a plane orthogonal to the transport direction X), with two second lateral arms which between them delimit the second passage opening and are connected by a second connection portion, which defines the free end 12 of the projecting element 11 itself and delimits, on the upper part, the same second passage opening.

In accordance with the preferred embodiment illustrated in the enclosed figures, with the load platform 10 in raised position and the rollers 8 actuated to rotate around their main axes Y, the second passage opening of each projecting element 11 in particular coincides with at least part of the crossing opening defined by each free end 12 with the rollers 8 and, therefore, the second passage opening of each projecting element 11 is susceptible of being traversed by the plate-like elements placed in abutment against the rollers 8.

In accordance with the embodiment not illustrated in the enclosed figures (that in which the base portion 14 is placed above the rollers 8), the first passage opening of each projecting element 11 (susceptible of being traversed by the plate-like elements when the load platform 10 is in lowered position) does not coincide with the crossing opening which is defined by the free end 12 of each projecting element 11 with the rollers 8 when the load platform 10 is in raised position. Indeed, in the non-illustrated embodiment with base portion 14 placed above the rollers 8, when the load platform 10 is moved from the lowered position to the raised position, the free ends 12 of the projecting elements 11 exit from the corresponding slit 9 in order to project from the rollers 8 and lift the plate-like elements that occupy the first passage openings of the projecting elements 11 and, simultaneously, the aforesaid free ends 12 define crossing openings with the rollers 8 susceptible of being traversed by other subsequent plate-like elements which are provided to the rollers after the passage of the load platform 10 from the lowered position to the raised position.

In order to reduce the weight of the load platform 10 as much as possible and thus facilitate the movement thereof, the load platform 10 is preferably formed by two plate-like side walls 21, each of which in particular shaped for defining the base portion 14 and the projecting elements 11, and by a plurality of connection beams 22, which are placed to mechanically connect the aforesaid plate-like side walls 21.

In particular, at each free end 12 of the projecting elements 11, a connection beam 22 is present, such that the plate-like elements which during use rest on the free ends 12 are placed on the aforesaid connection beams 22.

In particular, in accordance with the illustrated preferred embodiment, the two second lateral arms of each projecting element 11 each form part of a corresponding plate-like side wall 21 and the free end 12 of each projecting element 11 is defined by a corresponding connection beam 22 placed to mechanically connect the plate-like side walls 21 at the second lateral arms of the respective projecting element 11.

In particular, in accordance with the embodiment not illustrated in the enclosed figures, the two first lateral arms of each projecting element 11 each form part of corresponding plate-like side wall 21 and the free end 12 of each projecting element 11 is defined by a corresponding connection beam 22 placed to mechanically connect the plate-like side walls 21 at the first lateral arms of the respective projecting element 11.

Advantageously, the lifting means 6 comprise at least one linear actuator 13 arranged in order to move the load platform 10 between the lowered position and the raised position along a lifting direction Z, which is preferably perpendicular to the transport direction X and to the main axes Y of the rollers 8.

More in detail, the load platform 10 cannot be moved along directions transverse to the lifting direction Z.

In this manner, in particular, the projecting elements 11 placed at the slits 9 cannot interfere with the rollers 8, which occupy a fixed position, only being able to rotate around their main axes Y).

This means that the lifting means 6 are advantageously simple, usually comprising only one or more linear actuators whose operation is uncoupled from that of the rollers 8 of the advancing means 5.

More in detail, the at least one linear actuator 13 comprises an actuation cylinder, e.g. hydraulic or pneumatic, which is provided with a jacket 23 fixed to the support frame 2 and with a stem 24 slidably associated with the jacket 23 and mechanically connected to the load platform 10 in order to move it along the lifting direction Z.

Advantageously, the at least one linear actuator 13 (in particular the stem 24) and the load platform 10 are mechanically connected to each other with the interposition of the at least one load cell 7.

In this manner, when the load platform 10 is in raised position with one or more plate-like elements that rest on the free ends 12 of its projecting elements 11, the weight of the plate-like elements is directly unloaded on the at least one load cell 7.

As previously introduced above, the load platform 10 is advantageously provided with a base portion 14, starting from which the projecting elements 11 are extended.

Such base portion 14 advantageously has, on a plane parallel to the main axes Y of the rollers 8, substantially quadrangular form, with four sides 15 and four corners.

More in detail, the present machine 1 comprises four load cells 7, of which two are placed spaced from each other and at a side 15 of the base portion 14 and the other two are in turn placed spaced from each other and at an opposite side 15.

In this manner, the measurement of the weight by the load cells 7 will not be affected by the particular point along the main axes Y where the plate-like element is set on the rollers 8, with the weight of the aforesaid plate-like element which will be downloaded on a point of the load platform 10 that always falls within the perimeter formed by the four load cells 7.

More in detail, two sides 15 of the base portion 14 are determined by a lower edge of the plate-like side walls 21 and, in addition, the other two sides 15 transverse thereto can be determined by two connection beams 22, which are in particular substantially placed at the same height as the lower edge of the plate-like side walls 21.

In particular, two load cells 7 are placed spaced from each other and at a side 15 of the base portion 14 determined by a lower edge of a plate-like side wall 21 and the other two load cells 7 are placed spaced from each other and at an opposite side 15 of the base portion 14 determined by a lower edge of the other plate-like side wall 21.

In accordance with the preferred embodiment illustrated in the enclosed figures, the lifting means 6 advantageously comprise at least one intermediate platform 16, which is movable along the lifting direction Z by the at least one linear actuator 13 and carries, mounted thereon, the aforesaid four load cells 7 and, through these, the load platform 10. Therefore, in accordance with such embodiment, the at least one linear actuator 13 is arranged in order to move the load platform 10 along the lifting direction Z through the intermediate platform 16 and the load cells 7.

In order to reduce the weight of the intermediate platform 6, this is advantageously formed by four beams 36 connected two by two.

Preferably, in order to facilitate the movement of the intermediate platform 16 advantageously formed by the beams 36 by the at least one linear actuator 13, the intermediate platform 6 comprises a support plate 37 fixed to two opposite beams 36 and the at least one linear actuator 13 is arranged for acting against such support plate 37.

In particular, the stem 24 is mechanically connected to the aforesaid support plate 37.

In accordance with the embodiment illustrated in the enclosed figures, the lifting means 6 comprise two linear actuators 13 arranged for moving together the load platform 10 between the lowered position and the raised position along the lifting direction Z.

More in detail, each of the two linear actuators 13 is arranged for acting against a corresponding support plate 37 of the intermediate platform 16 and, in addition, the stem 24 of each of the actuation cylinders of the linear actuators 24 is mechanically connected to the respective support plate 37.

Otherwise, in accordance with a non-illustrated embodiment, the at least one linear actuator 13 comprises an electric motor, which is provided with a second casing mounted on the support frame 2 and with a second outlet shaft rotatably associated with the aforesaid second casing, a pinion, which is mechanically connected to the second outlet shaft in order to be rotated, and a rack, which is fixed to the load platform 10 or to the intermediate platform 16 if present, is extended parallel to the lifting direction Z and is engaged with the pinion in order to be moved along such lifting direction Z together with the load platform 10 and the intermediate platform 16 if present.

In order to precisely control the movement of the load platform 10, the present machine 1 advantageously comprises guide means 17, which are arranged for guiding the load platform 10 along the lifting direction Z between the lowered position and the raised position.

More in detail, the guide means 17 comprise at least one rail 18, which is mounted on the support frame 2 and is extended parallel to the lifting direction Z, and at least one slider 19, which is fixed to one between the intermediate platform 16 and the load platform 10 and is slidably associated with the rail 18.

In particular, the rail 18 can be provided with a guide rib and the corresponding slider 19 can be provided with a slide seat traversed by the guide rib of the rail 18, or, otherwise, the rail 18 can define a guide seat and the slider 19 can be provided with at least one portion thereof slidably inserted in the aforesaid guide seat of the rail 18.

In order to support the load platform 10 in the most stable possible manner along its movement between the lowered position and the raised position, the guide means 17 comprise multiple rails 18, which are mounted on the support frame 2 and are extended parallel to the lifting direction Z, and multiple sliders 19, each of which fixed to one between the intermediate platform 16 and the load platform 10 and slidably associated with a respective rail 18.

In particular, the guide means 17 comprise four rails 18 and four sliders 19, of which two are fixed to one of the beams 36 of the load platform 16 and the other two are fixed t an opposite beam 36.

In accordance with the embodiment illustrated in the enclosed figures, the support frame 2 comprises a first support structure 38, which carries the advancing means 5 mounted thereon, and a second support structure 39, which is separated from the first support structure 38 and carries the lifting means 6 mounted thereon.

More in detail, the first support structure 38 carries the rollers 8 (and in particular also the actuation motor 25, the transmission track 26 and the return rollers 27) mounted thereon.

Additionally, the second support structure 39 carries the load platform 10 mounted thereon and, therefore, also carries the at least one load cell 7 mechanically connected thereto (and in particular also the at least one linear actuator 13, the guide means 17 and the intermediate platform 16, if present).

Also forming the object of the present invention is a plant 100 for producing plate-like elements, in particular tiles.

A plant 100 for producing plate-like elements comprises, for example, at least one press, provided with molds for shaping the plate-like elements (such as the tiles) starting from clay granules or powder, and a furnace, arranged for subjecting the aforesaid plate-like elements to firing. Such press and furnace are only referred to here and are not described in detail since they are already known to the man skilled in the art.

The plant 100 according to the invention comprises at least one machine for enameling 101 plate-like elements, which is arranged for depositing an enamel layer on each plate-like element.

In addition, the present plant 100 comprises a first machine 1' for weighing plate-like elements of the above-described type, which is placed upstream of the machine for enameling 101 plate-like elements and whose at least one load cell 7 is arranged for measuring the weight of each plate-like element lacking enamel layer.

The present plant 100 is additionally provided with a second machine 1" for weighing plate-like elements of the above-described type, which is placed downstream of the machine for enameling 101 plate-like elements and whose at least one load cell 7 is arranged for measuring the weight of each plate-like element covered by the enamel layer.

More in detail, the first and the second machine 1', 1" are identical to each other and to the above-described machine 1 for weighing plate-like elements, and the numerical references 1' and 1" were only introduced for distinguishing from each other the machine that is situated upstream of the enameling machine 101 and the machine that is situated downstream of the enameling machine 101.

In particular, the expressions "upstream" and "downstream" must be intended with reference to the advancement sense of the plate-like elements along the present plant 100, i.e. the first machine 1' upstream of the enameling machine 101 is that which is intercepted by the plate-like elements which advance along the plant 100 before the enameling machine 101 and the second machine 1" downstream of the enameling machine 101 is that which is intercepted by the plate-like elements that advance along the plant after the enameling machine 101.

The present plant 100 comprises at least one electronic control unit 102 operatively connected at least to the load cell 7 of the first machine 1' for weighing and to the load cell 7 of the second machine 1" for weighing and arranged at least for calculating the weight of the enamel layer deposited on each plate-like element by the enameling machine 101 by executing a difference between the weight detected by the load cell 7 of the second machine 1" for weighing and the weight detected by the load cell 7 of the first machine 1' for weighing.

In this manner, by calculating the weight of the enamel layer on the plate-like elements, it is possible to establish if the correct quantity of enamel has been deposited by the enameling machine 101 and, thus, also if the thickness of the enamel is correct.

This advantageously allows discarding the plate-like elements on which an incorrect quantity of enamel has been deposited, preventing such plate-like elements from being subjected to subsequent processing.

More in detail, the first and second machine 1', 1" for weighing can be employed for weighing, by means of their load cells 7, each plate-like element separately or a group of multiple plate-like elements at a time.

In particular, weighing each plate-like element separately allows detecting, with good precision, which have the correct quantity of enamel and which do not, to the detriment of the number of overall of plate-like elements that can be weighed per unit of time, while weighing one group at a time, such group composed of multiple plate-like elements, allows weighing a greater number of plate-like elements per unit of time but requires moving away the entire group of plate-like elements in the event in which an incorrect quantity of enamel deposited on the entire group has been identified, in a manner such to verify at a later time which plate-like elements of the group moved away have the correct quantity of enamel and which actually do not have a correct quantity of enamel.

Additionally, a plant 100 having a first machine 1' for weighing upstream and a second machine 1" for weighing downstream of the enameling machine 101 has the advantage that the first machine 1' can be employed as storage on which the plate-like elements are maintained during a machine-stop of the enameling machine 101, thus preventing the plate-like elements from accidentally being dirtied with enamel in an uncontrolled manner.

Also forming the object of the present invention is a method for weighing plate-like elements, in particular tiles.

In particular, the method that will be described hereinbelow is the method that is applied by a machine 1 for weighing plate-like elements of the above-described type.

Such method provides for a step of arranging a plate-like element to be weighed, a plurality of rollers 8, which are side-by-side each other along a transport direction X, are each extended along a main axis Y thereof perpendicular to the transport direction X, are parallel to each other and each define, with the adjacent roller, an elongated slit 9, a load platform 10 provided with multiple projecting elements 11, each of which terminates with a free end 12 thereof and is placed at a respective slit 9, and with at least one load cell 7, which is mechanically connected to the load platform 10.

The present method additionally provides for a first advancing step, in which the rollers 8 are actuated to rotate around their main axes Y, in particular in a same rotation sense, in order to move the plate-like element along the transport direction X.

More in detail, such first advancing step is that which ensures that a plate-like element placed at a first roller 8 of the plurality of rollers 8 is transported by the rotation of the same rollers 8 towards those which are situated at the center of the plurality.

For example, in a machine 1 for weighing plate-like elements like that described above, the first advancing step is that which carries a plate-like element to be weighed from the inlet section 3 of the machine 1 itself towards the center of the plurality of rollers 8.

The present method also provides for a lifting step, in which the load platform 10 is positioned with its projecting elements 11 in a manner such that the free ends 12 of the projecting elements 11 project from the respective slits 9 and lift the plate-like element from the rollers 8, and a weighing step, in which the load cell 7 detects the weight of the lifted plate-like element with respect to the rollers 8.

Advantageously (as occurs in the machine 1 for weighing plate-like elements in accordance with the preferred embodiment illustrated in the enclosed figures), the load platform 10 is positioned with its projecting elements 11 to traverse respective slits 9 between the rollers 8 such that the free ends 12 of the projecting elements 11 project from the respective slits 9 and lift the plate-like element from the rollers 8, and a weighing step, in which the load cell 7 detects the weight of the lifted plate-like element with respect to the rollers 8.

More in detail, in the lifting step, the load platform 10 is positioned with its projecting elements 11 to traverse respective slits 9 by means of a first rectilinear translation a lifting direction Z, which is in particular perpendicular to the transport direction X and to the main axes Y of the rollers 8.

In addition, the present method comprises a laying step, in which the load platform 10 is positioned with the free ends 12 of its projecting elements 11 placed in corresponding slits 9 interposed between the rollers 8 so as to place the plate-like element on top of the rollers 8.

In particular, in the laying step, the load platform 10 is positioned with the free ends 12 of its projecting elements 11 placed in corresponding slits 9 interposed between the rollers 8 by means of a second rectilinear translation with sense opposite that of the first rectilinear translation along the same lifting direction Z.

Finally, the method for weighing plate-like elements comprises a second advancing step, in which the rollers 8 are actuated to rotate around their main axes Y, in particular in a same rotation sense, in order to move the plate-like element along the transport direction X.

More in detail, such second advancing step is that which ensures that a plate-like element placed at the rollers 8 substantially at the center of the plurality of rollers 8 is transported by the rotation of the same rollers 8 towards the last roller 8 of the aforesaid plurality.

For example, in a machine 1 for weighing plate-like elements like that described above, the second advancing step is that which carries a weighed plate-like element substantially from the center of the plurality of rollers 8 towards the outlet section 4.

The rotation sense in which the rollers 8 rotate in the second advancing step can then be the same as the first advancing step if it is desired that the weighed plate-like element is unloaded from the opposite side with respect to that where the same plate-like element has arrived when it still had be weighed, or it can be an opposite rotation sense if it is desired that the weighed plate-like element is unloaded from the same side where this arrived when it still had be weighed.

Also forming the object of the present invention is a method for producing plate-like elements, which in particular employs the method for weighing plate-like elements described up to now.

More in detail, the method for producing plate-like elements can be aimed in particular for attaining ceramic tiles and thus it can provide for a step of pressing of clay powders or granules in mold in order to obtain a plate-like element and a step of firing in a furnace of the plate-like element.

The method for producing plate-like elements according to the invention a first time provides for applying the method for weighing plate-like elements described above so that the load cell 7 detects the weight of the plate-like element before an enamel layer is deposited on the plate-like element.

Additionally, the present method provides for depositing an enamel layer on the plate-like element, for example by means of an enameling machine 101.

In addition, the present method a second time provides for applying the method for weighing plate-like elements described above so that the load cell 7 detects the weight of the plate-like element covered by the enamel layer.

In particular, the method for weighing plate-like elements can be executed the first time with a first machine 1' for weighing plate-like elements and the second time with a second machine 1" for weighing plate-like elements, in a manner such that the plate-like element traverses all the machines (including the enameling machine 101) only once without having to to change the sense of its advancing direction.

Otherwise, the method for weighing plate-like elements can be executed both the first and second time with a same machine 1 for weighing plate-like elements, hence without having to provide for two separate machines, but having to provide a second time the plate-like element with the enamel layer to the same machine 1 that weighed it when lacking enamel.

The method for producing plate-like elements also comprises a comparison step, in which a weight difference between the plate-like element covered by the enamel layer and the plate-like element lacking enamel layer is compared with at least one weight reference value of the enamel layer, and a sorting step, in which the plate-like element covered by the enamel layer is discarded if the weight difference deviates from the reference value.

More in detail, the comparison step can be executed by comparing the weight difference with a single reference value and, in such case, the plate-like element is discarded in the sorting step if the weight difference does not fall within a tolerance interval centered on such single reference value.

Otherwise, the comparison step can be executed by comparing the weight difference with two reference values and, in such case, the plate-like element is discarded in the sorting step if the weight difference is not comprised between the two reference values. The invention thus conceived therefore attains the pre-established objects.

## Claims

1. Machine (1) for weighing plate-like elements, in particular tiles, which comprises:
- at least one support frame (2) extended along a transport direction (X) between an inlet section (3), at which said machine (1) is susceptible of receiving said plate-like elements to be weighed, and an outlet section (4), at which said machine (1) is susceptible of unloading said weighed plate-like elements;
- advancing means (5) for advancing said plate-like elements, which are mounted on said support frame (2) and are arranged for moving said plate-like elements along said transport direction (X);
- lifting means (6) for lifting said plate-like elements, which are mounted on said support frame (2) and are arranged for lifting said plate-like elements from said advancing means (5);
- at least one load cell (7) mechanically connected to said lifting means (6) and arranged for detecting the weight of said lifted plate-like elements with respect to said advancing means (5);
said machine (1) being **characterized in that** said advancing means (5) comprise a plurality of rollers (8), which are side-by-side each other along said transport direction (X), are each extended along a main axis (Y) thereof perpendicular to said transport direction (X), are parallel to each other, each define an elongated slit (9) with the adjacent said roller and are actuatable to rotate around their main axes (Y) in order to move said plate-like elements along said transport direction (X);
said lifting means (6) comprising at least one load platform (10) provided with multiple projecting elements (11), each of which terminates with a free end (12) thereof and is placed at a respective slit (9);
said load platform (10) being movable at least between a lowered position, in which the free ends (12) of said projecting elements (11) are each placed in the corresponding said slit (9) and interposed between the two adjacent said rollers (8), and a raised position, in which said free ends (12) each project from the respective said slit (9) in order to lift said plate-like elements from the rollers (8) of said advancing means (5) and allow said at least one load cell (7) mechanically connected to said load platform (10) to detect the weight of said lifted plate-like elements.

2. Machine (1) according to claim 1, **characterized in that** said lifting means (6) comprise at least one linear actuator (13) arranged in order to move said load platform (10) between said lowered position and said raised position along a lifting direction (Z).

3. Machine (1) according to claim 2, **characterized in that** said lifting direction (Z) is perpendicular to said transport direction (X) and to the main axes (Y) of said rollers (8).

4. Machine (1) according to claim 2 or 3, **characterized in that** said at least one linear actuator (13) and said load platform (10) are mechanically connected to each other with the interposition of said at least one load cell (7).

5. Machine (1) according to any one of the preceding claims, **characterized in that** said load platform (10) is provided with a base portion (14), starting from which said projecting elements (11) are extended and having, on a plane parallel to the main axes (Y) of the rollers (8) of said advancing means (5), substantially quadrangular form, with four sides (15) and four corners;
said machine (1) comprising four load cells (7), of which two are placed spaced from each other and at one side (15) of said base portion (14) and two are placed spaced from each and at an opposite said side (15).

6. Machine (1) according to claim 4 and 5, **characterized in that** said lifting means (6) comprise at least one intermediate platform (16), which is movable along said lifting direction (Z) by said at least one linear actuator (13) and carries, mounted thereon, said four load cells (7) and, through these, said load platform (10).

7. Machine (1) according to claim 6, **characterized in that** it comprises guide means (17), which are arranged for guiding said load platform (10) along said lifting direction (Z) between said lowered position and said raised position;
said guide means (17) comprising at least one rail (18), which is mounted on said support frame (2) and is extended parallel to said lifting direction (Z), and at least one slider (19), which is fixed to one between said intermediate platform (16) and said load platform (10) and is slidably associated with said rail (18).

8. Plant (100) for producing plate-like elements, in particular tiles, which comprises at least:
- a machine for enameling (101) plate-like elements, which is arranged for depositing an enamel layer on each said plate-like element;
- a first machine (1') for weighing plate-like elements in accordance with any one of the preceding claims, which is placed upstream of said machine for enameling (101) plate-like elements and whose at least one said load cell (7) is arranged for measuring the weight of each said plate-like element lacking said enamel layer;
- a second machine (1") for weighing plate-like elements in accordance with any one of the preceding claims, which is placed downstream of said machine for enameling (101) plate-like elements and whose at least one said load cell (7) is arranged for measuring the weight of each said plate-like element covered by said enamel layer;
- at least one electronic control unit (102) operatively connected at least to the load cell (7) of said first machine (1') for weighing and to the load cell (7) of said second machine (1") for weighing and arranged at least for calculating the weight of said enamel layer deposited on each said plate-like element from said machine for enameling (101) by executing a difference between the weight detected by the load cell (7) of said second machine (1") for weighing and the weight detected by the load cell (7) of said first machine (1') for weighing.

9. Method for weighing plate-like elements, which provides for:
- a step of arranging:
- a plate-like element to be weighed;
- a plurality of rollers (8), which are side-by-side each other along a transport direction (X), are each extended along a main axis (Y) thereof perpendicular to said transport direction (X), are parallel to each other and each define, with the adjacent said roller, an elongated slit (9);
- a load platform (10) provided with multiple projecting elements (11), each of which terminating with a free end (12) thereof and placed at a respective said slit (9);
- at least one load cell (7), which is mechanically connected to said load platform (10);
- a first advancing step, in which said rollers (8) are actuated to rotate around their main axes (Y) in order to move said plate-like element along said transport direction (X);
- a lifting step, in which said load platform (10) is positioned with said projecting elements (11) thereof in a manner such that the free ends (12) of said projecting elements (11) project from the respective said slits (9) and lift said plate-like element from said rollers (8);
- a weighing step, in which said load cell (7) detects the weight of said lifted plate-like element with respect to said rollers (8);
- a laying step, in which said load platform (10) is positioned with the free ends (12) of said projecting elements (11) thereof placed in corresponding slits (9) interposed between said rollers (8) so as to place said plate-like element on top of said rollers (8);
- a second advancing step, in which said rollers (8) are actuated to rotate around their main axes (Y) in order to move said plate-like element along said transport direction (X).

10. Method for producing plate-like elements, which provides for:
- applying, a first time, the method for weighing plate-like elements according to claim 9 so that said load cell (7) detects the weight of said plate-like element before an enamel layer is deposited on said plate-like element;
- depositing an enamel layer on said plate-like element;
- applying, a second time, the method for weighing plate-like elements according to claim 9 so that said load cell (7) detects the weight of said plate-like element covered by said enamel layer;
- a comparison step, in which a difference of weight between said plate-like element covered by said enamel layer and said plate-like element lacking said enamel layer is compared with at least one weight reference value of said enamel layer;
- a sorting step, in which said plate-like element covered by said enamel layer is discarded if said weight difference deviates said reference value.
